# FASCICULE DE BREVET EUROPEEN

(11) **EP 0 943 822 B1**
(45) Date de publication et mention de la délivrance du brevet: **12.03.2003**
(21) Numéro de dépôt: 99400638.5
(22) Date de dépôt: 16.03.1999
(51) Int. Cl.: F16B 13/00, F16B 33/02

(54) **Cheville d'ancrage pour matériau friable**
Verankerungsdübel für sprödes Material
Anchoring dowel for brittle material

(30) Priorité: 16.03.1998 FR 9803175
(43) Date de publication de la demande: 22.09.1999
(60) Demande divisionnaire: 00112762.0
(73) Titulaire: SOCIETE DE PROSPECTION ET D'INVENTIONS TECHNIQUES SPIT, 26501 Bourg-Les-Valence Cédex (FR)
(72) Inventeur: Gauthier, Alain, 07300 Saint Jean de Muzols (FR); Barthomeuf, Jean-Paul, 26300 Bourg de Peage (FR)
(74) Mandataire: Bloch, Gérard

(56) Documents cités:
- EP-A- 0 425 358
- EP-A- 0 575 295
- WO-A-96/16273
- DE-U- 9 301 098
- FR-A- 2 588 332
- GB-A- 2 208 417
- US-A- 3 711 138
- US-A- 5 190 425

## Description

L'invention concerne une cheville d'ancrage pour matériau friable, tel qu'un panneau de cloison sèche par exemple du type de celui de la marque protégée placoplâtre.

Plus particulièrement, l'invention concerne une cheville d'ancrage pour matériau friable, comprenant un corps globalement creux avec une extrémité de perçage, à l'autre extrémité, une collerette d'appui et un filet de vis extérieur. Une telle cheville est notamment enseignée par le document EP-A-0165674.

Pour insérer une telle cheville dans une paroi friable, pour reprendre cet exemple, il suffit de visser la cheville dans la paroi sans qu'il soit nécessaire de percer au préalable de trou dans la paroi, comme cela est le cas avec de nombreuses autres chevilles d'ancrage. Grâce à cela, on simplifie beaucoup la pose.

Avec de telles chevilles, il existe néanmoins un risque de dévissage de la cheville, et donc de retrait inopportun de celle-ci de la paroi.

La présente invention vise à pallier cet inconvénient.

A cet effet, l'invention concerne une cheville d'ancrage pour matériau friable, comprenant les caractéristiques de la revendication 1.

Avantageusement, la collerette d'appui ménage une ouverture de réception du téton anti-rotation déplaçable dans ladite ouverture.

De préférence, la cheville présentant un axe, le téton anti-rotation est déplaçable dans une direction parallèle audit axe.

Avantageusement encore, le téton anti-rotation est détachable de la collerette d'appui.

Grâce à cela, après avoir insérer la cheville dans le matériau friable, un opérateur peut frapper les tétons détachables de façon à ce qu'ils pénètrent dans le matériau et bloquent la rotation de la collerette et par conséquent de la cheville.

Dans une forme de réalisation particulière, la collerette d'appui ménage deux ouvertures de réception d'un téton anti-rotation déplaçable dans l'ouverture, diamétralement opposées.

Avantageusement encore, le pas du filet extérieur du corps cylindrique creux est dégressif vers la collerette d'appui.

Dans ce cas, et de préférence, le pas du filet est sensiblement nul au voisinage de la collerette d'appui.

Grâce à cela, la rotation la cheville en sens inverse est rendue encore plus difficile.

Il peut également être prévu au moins une encoche anti-rotation ménagée dans le filet.

L'encoche contribue également à empêcher la rotation de la cheville en mordant le matériau.

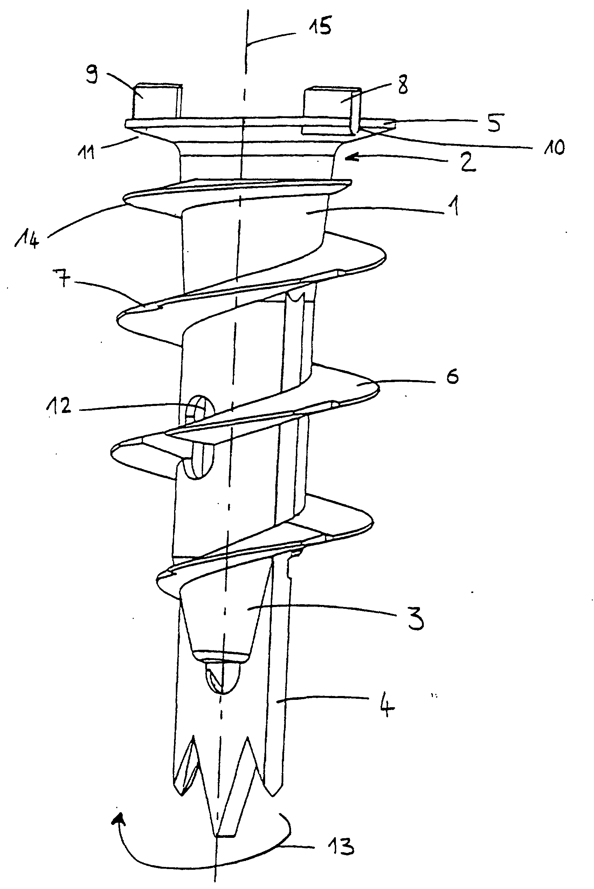

L'invention sera mieux comprise à l'aide de la description suivante d'une forme de réalisation particulière de la cheville de l'invention en référence à la figure unique annexée qui représente une vue en perspective de la cheville d'ancrage selon la forme de réalisation particulière.

La cheville d'ancrage, d'axe 15, est prévue pour la fixation d'un élément de fixation dans un support en matériau friable et comprend un corps cylindrique globalement creux 1, une extrémité de perçage 4 et une collerette d'appui 5. Un alésage axial s'étend à travers le corps cylindrique creux 1 et à travers les deux extrémités 2, 3 de celui-ci. L'extrémité de perçage 4 et la collerette d'appui 5 sont respectivement solidaires des deux extrémités 3, 2 du corps 1.

L'extrémité de perçage, plus précisément décrite dans le document EP-0165674, présente la forme d'une lame pourvue à son extrémité libre ici de trois dents pointues de perçage.

La collerette d'appui 5 ménage deux ouvertures 10, 11 de réception d'un téton anti-rotation 8, 9, fixé de façon détachable à la collerette 5 et déplaçable dans l'ouverture 10, 11. Les ouvertures 10, 11 consistent en l'espèce en des encoches ménagées dans le bord périphérique de la collerette 5 et diamétralement opposées l'une de l'autre par rapport à l'axe 15. Les deux tétons 8, 9, présentent globalement une forme de parallélépipède rectangle plat et s'étendent dans un plan axial, contenant l'axe 15. Ils font saillie de la collerette 5 du côté du corps 1, par une extrémité amincie de pénétration dans un matériau récepteur, et du côté opposé au corps 1, par une partie d'entraînement. Sous l'action d'une frappe exercée sur la partie d'entraînement dans une direction parallèle à l'axe 15, orientée vers l'extrémité de perçage 4, les tétons 8, 9 sont destinés se détacher de la collerette d'appui 5, et à se déplacer dans les ouvertures 10, 11, dans une direction parallèle à l'axe 15, afin d'être partiellement enfoncés dans un matériau de réception de la cheville et ainsi s'ancrer à la fois dans la collerette d'appui 5, grâce aux ouvertures 10, 11, et dans le matériau récepteur, ce double ancrage ayant pour effet de bloquer la rotation de la cheville. Les ouvertures 10, 11 permettent ainsi d'ancrer les tétons 8, 9 à la fois dans la collerette d'appui 5 et dans le matériau récepteur.

Un filet de vis extérieur 6 entoure le corps cylindrique creux 1, sensiblement sur toute sa hauteur parallèlement à l'axe 15. Le bord extérieur du filet ménage ici des encoches 7.

Par définition, le pas du filet 6 correspond à la hauteur, le long de l'axe du corps 1, parcourue par le filet 6 lorsqu'il fait un tour complet de 360°.

Le pas du filet 6 est dégressif depuis l'extrémité de perçage 4, où il est ici sensiblement égal à 6,35mm, vers la collerette 5 où il est ici nul. La partie 14 du filet 6, située au voisinage de la collerette 5 et ayant un pas nul, contribue ainsi à rendre difficile la rotation de la cheville en sens inverse au sens d'insertion 13.

En outre, l'épaisseur du filet 6 s'affine vers la collerette 5, afin de faciliter l'insertion de la cheville dans le matériau friable et éviter la formation de boursouflures de matériau friable, sous la collerette 5, lors de la pose de la cheville.

Le corps cylindrique creux 1 ménage ici une lumière d'évacuation 12 prévue le long du parcours du filet 6, à un endroit où le filet 6 est interrompu.

Après la description structurelle de la cheville d'ancrage, sa pose dans un support en matériau friable, en l'espèce une cloison sèche en matériau de la marque protégée placoplâtre, va maintenant être décrite.

On insère la cheville dans la cloison tout en la "vissant", autrement dit tout en l'entraînant en rotation dans le sens d'insertion 13, à l'aide d'un outil d'entraînement en rotation, en l'espèce un outil de vissage. Lors de son insertion dans le matériau friable, la cheville perce elle-même son trou de réception dans le matériau, à l'aide de son extrémité de perçage 4. On entraîne ainsi la cheville jusqu'à ce que la collerette d'appui 5 vienne en appui contre la margelle du trou.

Puis à l'aide d'un outil de frappe, ici un marteau, on frappe vers le support de la partie d'entraînement des tétons 8, 9 qui, sous l'action de la frappe, se détachent de la collerette 5 et se déplacent dans les ouvertures 10, 11 en s'enfonçant partiellement dans le support. On soulignera ici que la pénétration des tétons dans le matériau récepteur est facilité par leurs extrémités amincies. Après l'enfoncement partiel des tétons 8, 9 dans le support, une partie extérieure de chaque téton 8 (9) (l'extérieur et l'intérieur faisant référence à l'extérieur et à l'intérieur du trou) demeure dans l'encoche 10 (11). Les tétons 8, 9 sont ainsi ancrés à la fois dans la collerette 5 et dans le support récepteur et, par conséquent, bloquent la rotation de la cheville, en particulier dans le sens inverse au sens d'insertion 13. Grâce à cela, la cheville ne risque pas de se dévisser. Le pas du filet 6, du fait qu'il est nul au voisinage de la collerette 5, contribue à rendre difficile la rotation de la cheville en sens inverse au sens d'insertion 13 de la cheville. Les encoches anti-rotation 7, mordant le matériau, ont également pour effet d'empêcher la rotation de la cheville.

Puis on introduit dans l'alésage du corps 1 de la cheville un élément de fixation à l'aide duquel on peut fixer un objet au support.

On soulignera que la lumière d'évacuation 12 permet d'évacuer le matériau friable ayant pénétré dans l'alésage du corps 1, notamment lors de l'introduction de l'élément de fixation dans la cheville.

Dans la description qui vient d'être faite, la collerette d'appui ménage deux ouvertures de réception d'un téton anti-rotation. On pourrait ne ménager qu'une seule ouverture, ou plus de deux ouvertures.

Les ouvertures de réception d'un téton anti-rotation pourraient être ménagées non pas dans le bord de la collerette d'appui mais à l'intérieur de celle-ci.

Par ailleurs, les tétons anti-rotation pourraient être non fixés à la collerette d'appui et introduits dans les ouvertures lors de la pose de la cheville.

## Revendications

1. Cheville d'ancrage pour matériau friable, comprenant un corps globalement creux (1) avec une extrémité de perçage (4), une collerette d'appui (5) à l'autre extrémité, et un filet de vis extérieur (6) et des moyens anti-rotation (8, 9, 14, 7), **caractérisée par le fait que** les moyens anti-rotation comprennent au moins un téton anti-rotation (8,9) et la cheville comprend des moyens (10, 11) pour ancrer au moins le téton anti-rotation (8, 9) à la fois dans la collerette d'appui (5) et dans le matériau.

2. Cheville selon la revendication 1, dans laquelle la collerette d'appui (5) ménage une ouverture (10, 11) de réception du téton anti-rotation (8, 9) déplaçable dans ladite ouverture (10, 11).

3. Cheville selon la revendication 2, dans laquelle, la cheville présentant un axe, le téton anti-rotation (8, 9) est déplaçable dans une direction parallèle audit axe.

4. Cheville selon l'une des revendications 1 à 3, dans laquelle le téton anti-rotation (8, 9) est détachable de la collerette d'appui (5).

5. Cheville selon l'une des revendications 1 et 4, dans laquelle la collerette d'appui (5) ménage deux ouvertures (10, 11) de réception du téton anti-rotation (8, 9) déplaçable dans l'ouverture (10, 11), diamétralement opposées.

6. Cheville selon l'une des revendications 1 à 5, dans laquelle le téton (8, 9) fait saillie du côté de la collerette d'appui (5) opposé au corps cylindrique globalement creux (1).

7. Cheville selon l'une des revendications 1 à 6, dans laquelle le téton (8, 9) comprend une extrémité amincie de pénétration dans le matériau.

8. Cheville selon l'une des revendications 1 à 7, dans laquelle le pas du filet extérieur (6) du corps cylindrique globalement creux (1) est dégressif vers la collerette d'appui (5).

9. Cheville d'ancrage selon la revendication 8, dans laquelle le pas du filet (6, 14) est sensiblement nul au voisinage de la collerette d'appui (5).

10. Cheville selon l'une des revendications 1 à 9, dans laquelle l'épaisseur du filet (6) s'affine vers la collerette d'appui (5).

11. Cheville selon l'une des revendications 1 à 10, dans laquelle le filet (6) ménage au moins une encoche anti-rotation (7).

12. Cheville selon l'une des revendications 1 à 11, comprenant au moins une lumière d'évacuation (12).

## Claims

1. Anchor bolt for friable material, comprising a generally hollow body (1) with a drilling end (4), a supporting collar (5) at the other end and an external screw thread (6) and anti-rotation means (8, 9, 14, 7), **characterised in that** the anti-rotation means comprising at least one anti-rotation pin (8, 9) and the bolt comprises means (10, 11) for anchoring at least the anti-rotation pin (8, 9) into both the supporting collar (5) and the material.

2. Bolt according to claim 1, in which the supporting collar (5) provides an opening (10, 11) for receiving the anti-rotation pin (8, 9) movable within said opening (10, 11).

3. Bolt according to claim 2, in which, the bolt having an axis, the anti-rotation axis (8, 9) is movable along a direction parallel to said axis.

4. Bolt according to one of claims 1 to 3, in which the anti-rotation pin (8, 9) can be detached from the supporting collar (5).

5. Bolt according to one of claims 1 and 4, in which the supporting collar (5) provides two openings (10, 11) for receiving the anti-rotation pin (8, 9) movable within the opening (10, 11), diametrically opposed.

6. Bolt according to one of claims 1 to 5, in which the pin (8, 9) projects from the side of the supporting collar (5) opposite the generally hollow cylindrical body (1).

7. Bolt according to one of claims 1 to 6, in which the pin (8, 9) comprises a narrowed end for penetrating into the material.

8. Bolt according to one of claims 1 to 7, in which the pitch of the external thread (6) of the generally hollow cylindrical body (1) decreases towards the supporting collar (5).

9. Anchor bolt according to claim 8, in which the pitch of the thread (6, 14) is substantially zero in the vicinity of the supporting collar (5).

10. Bolt according to one of claims 1 to 9, in which the thickness of the thread (6) is reduced towards the supporting collar (5).

11. Bolt according to one of claims 1 to 10, in which the thread (6) provides at least one anti-rotation notch (7).

12. Bolt according to one of claims 1 to 11, comprising at least one evacuation opening (12).

## Patentansprüche

1. Verankerungsdübel für ein bröckeliges Material,
der einen insgesamt hohlen Körper (1) mit einem Bohrungsende (4), mit einem Abstützkragen (5) am anderen Ende und mit einem Außengewinde (6) sowie rotationshemmende Einrichtungen (8, 9, 14, 7) aufweist,
**dadurch gekennzeichnet,**
**daß** die rotationshemmenden Einrichtungen mindestens einen rotationshemmenden Ansatz (8, 9) aufweisen und daß der Dübel Einrichtungen (10, 11) aufweist, um zumindest den rotationshemmenden Ansatz (8, 9) zugleich in dem Abstützkragen (5) und in dem Material zu verankern.

2. Dübel nach Anspruch 1,
wobei in dem Abstützkragen (5) eine Öffnung (10, 11) zur Aufnahme des in der Öffnung (10, 11) verschiebbaren rotationshemmenden Ansatzes (8, 9) ausgespart ist.

3. Dübel nach Anspruch 2,
wobei der Dübel eine Achse aufweist und wobei der rotationshemmende Ansatz (8, 9) in einer Richtung parallel zur Achse verschiebbar ist.

4. Dübel nach einem der Ansprüche 1 bis 3,
wobei der rotationshemmende Ansatz (8, 9) vom Abstützkragen (5) abnehmbar ist.

5. Dübel nach einem der Ansprüche 1 bis 4,
wobei in dem Abstützkragen (5) zwei Öffnungen (10, 11) zur Aufnahme des in der Öffnung (10, 11) verschiebbaren rotationshemmenden Ansatz es (8, 9) ausgespart sind, die einander diametral gegenüberliegen.

6. Dübel nach einem der Ansprüche 1 bis 5,
wobei der Ansatz (8, 9) von der Seite des Abstützkragens (5) vorsteht, die dem insgesamt hohlen, zylindrischen Körper (1) gegenüberliegt.

7. Dübel nach einem der Ansprüche 1 bis 6,
wobei der Ansatz (8, 9) ein dünner werdendes Ende zum Eindringen in das Material aufweist.

8. Dübel nach einem der Ansprüche 1 bis 7,
wobei die Steigung des Außengewindes (6) des insgesamt hohlen, zylindrischen Körpers (1) zum Abstützkragen (5) hin abnimmt.

9. Verankerungsdübel nach Anspruch 8,
wobei die Steigung des Gewindes (6, 14) in der Nähe des Abstützkragens (5) im wesentlichen Null ist.

10. Dübel nach einem der Ansprüche 1 bis 9,
wobei die Dicke des Gewindes (6) zum Abstützkragen (5) hin feiner wird.

11. Dübel nach einem der Ansprüche 1 bis 10,
wobei in dem Gewinde (6) mindestens eine rotationshemmende Kerbe (7) ausgespart ist.

12. Dübel nach einem der Ansprüche 1 bis 11,
der mindestens eine Entleerungsöffnung (12) aufweist.
